# EUROPEAN PATENT SPECIFICATION

(11) **EP 0 459 037 B1**
(45) Date of publication and mention of the grant of the patent: **29.11.1995**
(21) Application number: 90304665.4
(22) Date of filing: 30.04.1990
(51) Int. Cl.: H01M 4/74, H01M 4/82, H01M 2/28

(54) **Lead-acid battery plate and method of manufacturing same**
Bleisäure-Batterieplatte und Verfahren zu ihrer Herstellung
Plaque pour batterie au plomb-acide et méthode de fabrication

(43) Date of publication of application: 04.12.1991
(60) Divisional application: 93109209.2
(73) Proprietor: YUASA CORPORATION, Takatsuki-shi, Osaka 569 (JP)
(72) Inventor: Senoo, Keiji, c/o Yuasa Battery Co., Ltd., Takatsuki-shi, Osaka (JP); Yoshida, Takamasa, c/o Yuasa Battery Co., Ltd., Takatsuki-shi, Osaka (JP); Ishikawa, Hideharu, c/o Yuasa Battery Co., Ltd., Takatsuki-shi, Osaka (JP); Takura, Masao, c/o Yuasa Battery Co., Ltd., Takatsuki-shi, Osaka (JP)
(74) Representative: Linn, Samuel Jonathan

(56) References cited:
- EP-A- 0 124 745
- DE-A- 2 404 650
- DE-U- 8 616 611
- FR-A- 2 616 593
- PATENT ABSTRACTS OF JAPAN, vol. 10, no. 117 (E-400)[2174], 2nd May 1986;
- PATENT ABSTRACTS OF JAPAN, vol. 14, no. 354 (E-958)[4297], 31st July 1990
- PATENT ABSTRACTS OF JAPAN, vol. 14, no. 359 (E-959)[4302], 3rd August 1990
- PATENT ABSTRACTS OF JAPAN, vol. 12, no. 393 (E-670)[3240], 19th Oktober 1988; & JP-A-63 133 453 (JAPAN STORAGE BATTERY) 06-06-1988
- PATENT ABSTRACTS OF JAPAN, vol. 11, no. 384 (E-565)[2831], 15th December 1987; & JP-A-62 150 659 (JAPAN STORAGE BATTERY CO.) 04-07-1987
- PATENT ABSTRACTS OF JAPAN, vol. 12, no. 320 (E-651)[3167], 30th August 1988
- PATENT ABSTRACTS OF JAPAN, vol. 14, no. 368 (E-962)[4311], 9th August 1990

## Description

This invention relates to a method of manufacture of a lead-acid battery plate making use of copper for a grid.

Generally, lead alloy has been used for a grid for a lead-acid battery plate.

In a lead-acid battery making use of such a plate, however, the electric resistance of the lead alloy is as high as about 21 micro ohm-cm, so that ohmic resistance polarization due to grid resistance becomes so large as to cause a drop in discharge voltage when the battery is discharged with a large current. Moreover, the specific gravity of the lead alloy is as large as 11 so that weight efficiency is low. Furthermore, when the height of the plate increases the grid resistance has a large influence on battery characteristics, so that only an upper part of the plate, which is provided with a plate lug, is concerned with charge and discharge reactions and the lower part thereof is not involved. For this reason, a grid made of lead alloy has not been suitable for use in a tall plate as required in a large lead-acid battery.

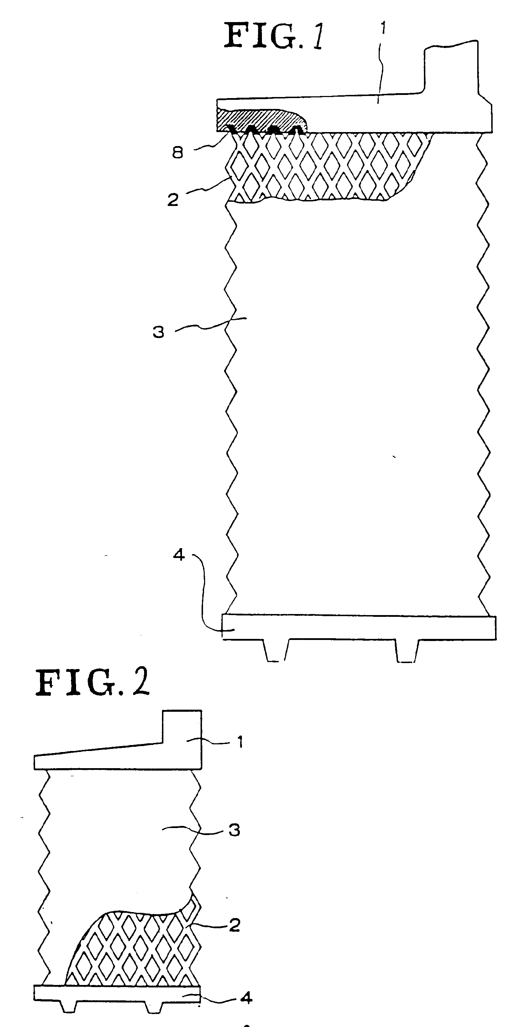

In view of the above, the use of copper, which has better electric conductivity than lead alloy, has been proposed, and a plate, as illustrated by Fig. 2, making use of an expanded metal comprising copper as the grid has been adopted.

The battery plate illustrated in Fig. 2 comprises a plate lug 1 of lead alloy, a grid 2 made of an expanded metal of copper on which lead alloy or lead tin alloy is electroplated, a negative active material 3, and a lower connection body 4. The reason why the lead alloy or lead-tin alloy is electroplated on the grid 2 is that copper itself dissolves in the electrolyte of the battery, causing an increase in self-discharge, a reduction in capacity, and a lowering of charging efficiency etc.

The plate as illustrated by Fig. 2 has conventionally been manufactured in such a way that the lead alloy or lead-tin alloy is electroplated on the copper expanded metal and then the plate lug 1 is connected thereto by casting. Since the layer covering the copper has a melting point lower than a melting temperature of the lead alloy to be cast, the layer around a boundary surface between the grid 2 and the plate lug 1 tends to melt and become thin or peel off, and in an extreme case the copper can become exposed during such casting. In order to prevent the copper from being exposed, a double electroplating layer structure has been employed, namely a first electroplating layer of lead-tin alloy or tin alloy which is readily alloyed with copper, and a second electroplating layer of lead. However, even this method has not been able to completely prevent the layer from peeling off.

Another way in which this problem has been tackled has been to try and carry out the casting at as low a temperature as possible. However, with this method difficulties have then arisen in properly forming the plate lug 1, and connection between the grid 2 and the plate lug 1 has often been so weak that grid resistance has increased.

DE-U-8616611.5 discloses a battery plate in which a tin layer is disposed between copper expanded metal and lead coating, and to which a copper lug is connected by casting.

An object of the invention is to provide a method of manufacturing a lead acid battery plate, which avoids the above discussed problems and also allows for a high rate of production.

This invention provides a method of manufacturing a lead-acid battery plate, wherein a plate lug comprising lead or lead alloy is connected by casting to an upper part of the grid, and an expanded metal comprising copper or copper alloy electroplated with lead or lead alloy is utilised as a grid,
characterised in that tin or lead-tin alloy is electroplated on at least the upper part of the copper expanded metal, then the plate lug is connected by casting to said upper part, and then lead or lead alloy is electroplated on the copper expanded metal.

The invention will be described further, by way of example, with reference to the accompanying drawings, in which:
- Fig.1: is an enlarged partially cut away view of a lead-acid battery plate manufactured by a method according to this invention; and
- Fig.2: is a partially cut away view of a conventional lead-acid battery plate, as already mentioned.

The lead-acid battery plate shown in Figs 1 and 2 comprises a plate lug 1 formed of lead alloy, a grid 2 consisting of lead plated onto a copper expanded metal, a negative active material 3, and a lower connection body 4 made of synthetic resin.

An embodiment of the manufacturing method of the lead-acid battery plate of the present invention will now be described with reference to Fig.1. In this figure, reference numeral 8 designates a layer of tin or lead-tin alloy.

In the first place, a sheet of copper is punched and expanded using an expanding machine to obtain the copper expanded metal which is the base material of the grid 2. Next, the copper expanded metal is cut to the required size of plate and protruding parts of both upper and lower ends are flattened to facilitate casting of the plate lug 1 to the top and fitting of the lower connection body, which take place later.

Then, tin or lead-tin alloy 8 is electroplated on the upper end of the expanded metal to enhance the security of the connection between the plate lug 1 and the copper expanded metal. Usually, a solder with low melting point having lead of a mass percentage of 50 to 70% is preferable for the lead-tin alloy. In order to increase its connecting strength, it is recommended to add a third component metal such as Sb alloy, Ag, Bi, Cd etc. to the tin or lead-tin alloy to be electroplated.

The layer 8 of the tin or lead-tin alloy may be applied to the entire surface of the copper expanded metal.

There are two electroplating methods: one wherein the copper expanded metal is subjected to degressing and acid treatment, and then to electroplating; and another wherein the copper expanded metal is subjected to acid treatment and flux treatment, and then to hot dipping in a soldering bath.

In this respect in one practical procedure, the copper expanded metal is fixed to a mould, and molten lead alloy is poured into the mould to form the plate lug 1. The plate lug 1 is then grasped to hang up the expanded metal grid and it is dipped into a cleaning bath for degreasing and/or acid treatment etc. and then placed in a soldering bath where the lead is connected to a positive electrode and the expanded metal grid with the plate lug 1 is connected to a negative electrode, and they are energized to carry out the electroplating work. Energizing time differs depending on the purpose of the battery. However, it usually is so determined as to form an electroplating layer of 20 to 300 microns. This is a thickness which generally avoid rupture during any subsequent manufacturing process of the plate and withstands charging and discharging during operation of the battery.

In order to evenly electroplate mesh clearances (aperture edges) of the expanded copper grid (which is generally difficult to accomplish), lead-tin alloy may be electroplated thereto, or two-layer plating may be employed wherein lead-tin alloy is electroplated and then lead is further electroplated thereon. Thus, surfaces of the copper expanded metal, with the plate lug 1 attached, are electroplated to obtain the grid 2. In order to electroplate the entire surface of the copper expanded metal, at least a part of the plate lug 1 is also electroplated.

After cleaning and drying the grid 2, the lower connection body 4 is fitted to a lower part of the grid 2. The lower connection body 4 may be made of lead or lead alloy in the same way as the plate lug 1. However, it is preferably made of synthetic resin because the lower connection body 4 is a part requiring no current collection, and its weight and its cost can thereby be minimised.

Finally, the active material 3 is applied to obtain the plate as shown in Fig. 1.

As previously mentioned, the plate lug 1 may alternatively be made of lead.

The grid 2 may be formed by using a sheet comprising copper alloy (instead of copper) and may be formed entirely by punching work in place of the expanding work. Also, the grid 2 may be formed by electroplating lead alloys other than the lead-tin alloy on the expanded copper/copper alloy.

Various batteries (designated as A through D) were manufactured, five cells for each, wherein five positive electrodes consisting of the usual grid made of lead alloy were combined with negative electrodes manufactured by various methods using copper expanded metal.

The A battery is one which makes use of the plate according to the present invention. The plate is formed in such a way that an upper part of the copper expanded metal is electroplated with solder and the plate lug is cast thereon, and 100-microns-thick lead is then electroplated on the copper expanded metal to which the plate lug is connected by casting.

The B battery is one which makes use of a plate manufactured by omitting the electroplating of solder on the upper part of the copper expanded metal in the manufacturing process of the A battery.

The C battery is one which makes use of a plate manufactured by a conventional method. The plate is formed in such a way that 10-microns thick lead-tin alloy is electroplated on the copper expanded metal and 90-microns thick lead is further electroplated thereon, and the plate lug is cast thereon.

The D battery is one which makes use of a plate manufactured by omitting the electroplating of lead-tin alloy in the manufacturing process of the C battery and electroplated with 100-microns thick lead.

In the first place, each battery was discharged at a current of five hour rate up to a final discharging voltage of 1.70V, and then charged up to 120% of discharged capacity. After repeating the discharging and charging for 10 cycles, 10 cc of electrolyte was taken out after the final discharging and the dissolved quantity of copper was determined. The results are listed in Table 1. In an eleventh cycle, the battery was discharged up to the final discharging voltage of 1.70V and shunted and held for 24 hours, then 10 cc of electrolyte was taken out, and the dissolved quantity of copper was again determined in the same manner. The results are listed in Table 2. The dissolved quantity of copper is indicated in p.p.m. and the numbers 1 to 5 indicate the cell number in Tables 1 and 2.

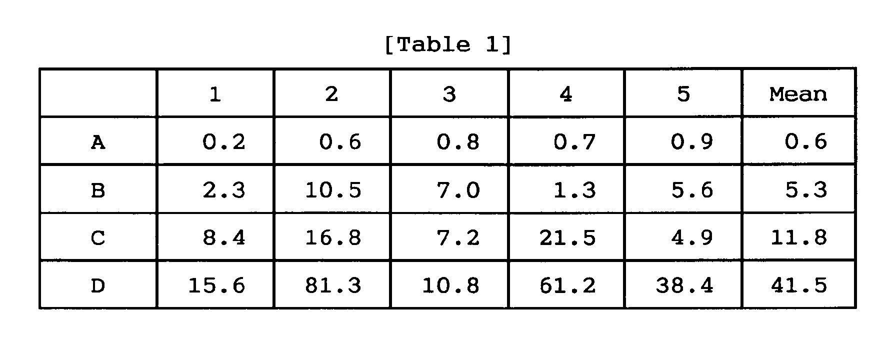

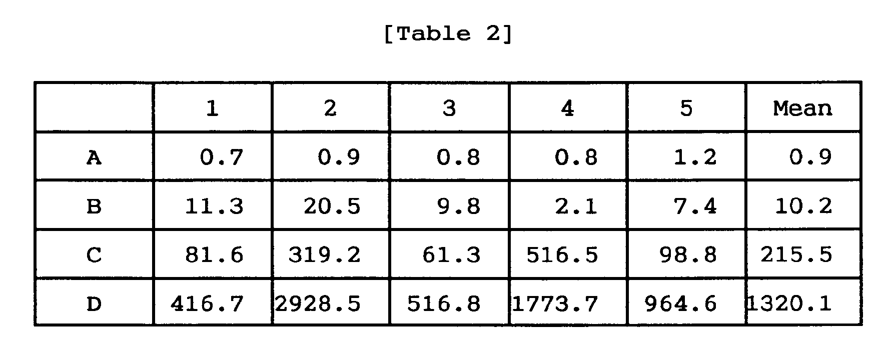

As seen from Tables 1 and 2, the battery making use of the plate according to this invention is excellent because of its low dissolved quantity of copper, even in the overdischarged state.

Subsequently, each battery, which was discharged at a current of five hour rate up to a final discharging voltage of 1.70V, underwent a twelfth cycle of charging and the following discharging duration was determined.
The results are listed in Table 3.

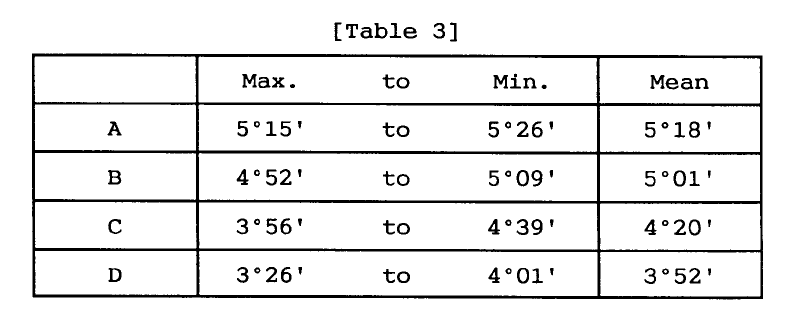

As seen from Table 3, the capacity of the battery making use of the plate of this invention is large even after being shunted and left.

The battery voltage of each battery during charging is reduced in proportion to the dissolved quantity of copper in the electrolyte, and generation of hydrogen gas increases.

Finally each battery was sectioned and the dissolving state of the copper was examined.

In battery A (of this invention) no dissolution of copper was found even in the active material.

In battery B copper was dissolved in the vicinity of the boundary surface between the plate lug and the copper expanded metal. This was caused by the fact that the plate lug was not connected to the copper expanded metal tightly and a clearance existed therebetween so that the electroplating was not done completely.

In battery C, and electroplating layer in the vicinity of the boundary surface between the plate lug and the copper expanded metal was dissolved causing partial cracking, and copper was dissolved so that a large quantity of copper was found in the active material. Moreover, in a part of the plate, copper was exposed due to breakdown of electroplating layer which occurred when casting the plate lug.

The state of battery D was worse than that of batter C since the dissolved quantity of copper was increased.

In the battery manufactured according to the present invention, as described above, the disadvantageous dissolution copper can be avoided.

According to the currently proposed method of manufacturing a lead acid battery plate, the plate lug 1 is connected by casting to the upper part of the copper expanded metal, and lead or lead alloy is then electroplated on the copper expanded metal to which the plate lug 1 is connected. Therefore, the copper can be prevented from being exposed, as occurs in a conventional battery due to thinning or peeling off of the electroplated layer of the grid 2 at the time of casting. Especially when tin or lead alloy is electroplated on the upper part of copper expanded metal before connecting the plate lug 1 thereto, the connection can be secure between the copper expanded metal and the plate lug 1. Accordingly, the increase in grid resistance can be controlled, the dissolution of copper from the vicinity of boundary surface between the copper expanded metal and the plate lug 1 can be prevented, and a lead acid battery plate of excellent quality can be obtained.

## Claims

1. A method of manufacturing a lead-acid battery plate, wherein a plate lug (1) comprising lead or lead alloy is connected by casting to an upper part of a grid (2), and an expanded metal comprising copper or copper alloy electroplated with lead or lead alloy is utilised as the grid (2),
characterised in that tin or lead-tin alloy (8) is electroplated on at least the upper part of the copper expanded metal, then the plate lug (1) is connected by casting to said upper part, and then lead or lead alloy is electroplated on the copper expanded metal.

## Patentansprüche

1. Verfahren zur Herstellung einer Blei-Säure-BatteriePlatte, worin ein Plattenvorsprung (1), umfassend Blei oder eine Blei-Legierung durch Gießen mit einem oberen Teil eines Gitters (2) verbunden ist, und ein gestrecktes Metall, umfassend Kupfer oder eine Kupfer-Legierung, das(die) mit Blei oder Blei-Legierung galvanisiert ist, als das Gitter (2) verwendet wird, dadurch gekennzeichnet, daß Zinn oder eine Blei-Zinn-Legierung (8) auf wenigstens dem oberen Teil des gestreckten Metalls aus Kupfer galvanisiert wird, dann der Plattenvorsprung (1) durch Gießen mit dem oberen Teil verbunden wird, und dann Blei oder eine Blei-Legierung auf das gestreckte Kupfermetall galvanisiert wird.

## Revendications

1. Procédé de fabrication d'une plaque de batterie acide-plomb, dans lequel une queue de plaque (1) comprenant du plomb ou un alliage de plomb est connectée par moulage à une partie supérieure d'une grille (2), et un métal expansé, comprenant du cuivre ou un alliage de cuivre, électroplaqué avec du plomb ou un alliage de plomb, est utilisé comme grille (2), caractérisé en ce que de l'étain ou un alliage plomb-étain (8) est électroplaqué au moins sur la partie supérieure du métal expansé à base de cuivre, puis la queue de plaque (1) est connectée par moulage à ladite partie supérieure et le plomb ou l'alliage de plomb est ensuite électroplaqué sur le métal expansé à base de cuivre.
